# FASCICULE DE BREVET EUROPEEN

(11) **EP 4 256 945 B1**
(45) Date de publication et mention de la délivrance du brevet: **16.04.2025**
(21) Numéro de dépôt: 23164440.2
(22) Date de dépôt: 27.03.2023
(51) Int. Cl.: A01D 89/00

(54) **MODULE DE RAMASSAGE D'ANDAINS COMPORTANT UN DISPOSITIF DE VENTILATION**
SCHWADENAUFNAHMEMODUL MIT BELÜFTUNGSVORRICHTUNG
SWATH PICKUP MODULE WITH VENTILATION DEVICE

(30) Priorité: 05.04.2022 FR 2203089
(43) Date de publication de la demande: 11.10.2023
(73) Titulaire: N.V. Depoortere, 8791 Beveren-Leie (BE)
(72) Inventeur: DEPOORTERE, Rik, 8908 Vlamertinge (BE)
(74) Mandataire: Cabinet Beau de Loménie

(56) Documents cités:
- EP-A1- 3 326 448
- US-A- 3 901 008
- US-A1- 2008 271 428
- US-B2- 10 537 068
- US-B2- 7 516 604

## Description

### Domaine Technique

La présente invention porte sur le ramassage de fibres végétales disposées sur le sol, notamment sous forme de bandes ou d'andains. Un exemple d'utilisation non limitatif est le ramassage d'andains de tiges de lin ou de chanvre lors des opérations de retournage ou d'enroulage.

L'invention porte plus particulièrement sur un module de ramassage que l'on trouve généralement à l'avant des machines de retournage ou d'enroulage.

### Technique Antérieure

Traditionnellement, un module de ramassage d'andains de tiges végétales comprend :
- une partie avant munie d'une roue de terrage qui est agencée pour rouler sur un sol selon un premier sens de rotation lorsque le module de ramassage se déplace selon un premier sens de déplacement ;
- un dispositif de ramassage pour prélever les andains de tiges végétales déposées au sol, comprenant au moins un premier ensemble de doigts de ramassage qui est rotatif autour d'un premier axe de rotation selon un second sens de rotation opposé au premier sens de rotation de la roue de terrage ;
- un élément de guidage disposé au-dessus de l'ensemble de doigts de ramassage ;
- une courroie de convoyage pour amener les tiges végétales ramassées vers une partie arrière du module de ramassage.

Le module de ramassage peut équiper une machine de retournage ou bien une machine d'enroulage. Ces machines comportent des moyens moteurs pour déplacer la machine dans le champ selon le premier sens de déplacement, correspondant au sens de travail.

Le dispositif de ramassage est généralement appelé « pick-up ». Un exemple de réalisation est décrit dans les documents FR 3 090 267 et EP 3 326 448.

Le dispositif de ramassage, qui se présente généralement sous la forme d'une roue de ramassage, est disposé à l'avant de la machine et est agencé pour être positionné à proximité du sol. Les doigts de ramassage ont pour fonction de ramasser ou prélever les tiges déposés sur le sol sous forme d'andains et de les amener vers un organe de convoyage, telle une courroie à picots, dont la fonction est de convoyer les tiges vers un module de retournage ou d'enroulage disposé à l'arrière de la machine.

Pour assurer un ramassage efficace des tiges et permettre leur transfert vers l'organe de convoyage ou de retournage, la roue de ramassage est généralement agencée de sorte que les doigts sont déployés sensiblement au maximum lorsqu'ils s'étendent vers le sol, et sont totalement ou quasiment rétractés à l'endroit où les tiges sont prises en charge par la courroie à picots.

En position déployée, il arrive que les doigts viennent gratter le sol, ce qui a pour effet de générer de la poussière et soulever des cailloux. Les particules de poussière et les cailloux sont alors entrainés avec les tiges par la courroie à picots. Lorsque la machine est une enrouleuse, on comprend que ces particules et cailloux se retrouvent ensuite dans la balle.

Les inventeurs ont constaté qu'une balle de tiges végétales pouvaient contenir jusqu'à 10 % en moyenne en masse de poussières, cailloux ou autres particules indésirables.

Un inconvénient est que ces corps étrangers sont ensuite libérés lorsque la balle est déroulée pendant l'opération de teillage. L'opération de teillage étant généralement réalisée à l'intérieur d'un bâtiment, on comprend que la génération de poussière est indésirable pour la santé des opérateurs. De plus, la présence de poussières est susceptible de dégrader la qualité de la fibre obtenue à l'issue des opérations de teillage.

### Exposé de l'invention

Un but de l'invention est de remédier aux inconvénients précités en proposant un module de ramassage qui évite, ou à tout le moins diminue sensiblement, la présence de poussières dans l'andain ramassé.

Pour ce faire, l'invention porte sur un module de ramassage d'andains de tiges végétales qui comporte un dispositif de ventilation pour générer au moins un flux d'air entre l'élément de guidage et le dispositif de ramassage afin d'évacuer la poussière de sol générée lors du prélèvement des andains par l'ensemble des doigts de ramassage.

Le flux d'air permet donc d'évacuer la poussière - susceptible d'être générée lors du prélèvement de l'andain par les doigts de ramassage qui frottent contre le sol - avant que l'andain ne soit pris en charge par la courroie de convoyage. On limite ainsi sensiblement le taux de corps étrangers dans l'andain convoyé et, par voie de conséquence, dans la balle formée par le module d'enroulage de l'enrouleuse. L'invention présente également un intérêt lorsque le module de ramassage équipe une retourneuse dès lors que l'on limite la présence de poussière dans le module de retournage susceptible d'endommager les composants de ce module et que l'on évite que la poussière ne se mêle aux tiges retournées

Selon l'invention, le flux d'air peut être un flux de soufflage ou bien d'aspiration.

L'élément de guidage sert à guider le déplacement de l'andain. Il peut être constitué d'une plaque ou bien d'un boitier selon l'endroit où est disposé le dispositif de ventilation. L'élément de guidage présente un profil courbe de façon à guider l'andain vers la courroie de convoyage. On comprend que l'andain ramassé se déplace entre le dispositif de ramassage et l'élément de guidage en étant entrainé par les doigts avant d'être pris en charge par la courroie de convoyage.

De façon préférentielle, la courroie de convoyage est une courroie à picots, connue par ailleurs. De préférence, mais non exclusivement, la courroie de convoyage est disposée au-dessus du dispositif de ramassage.

Avantageusement, l'élément de guidage comporte une enceinte ayant une paroi d'enceinte, et le dispositif de ventilation comporte des orifices ménagés dans la paroi d'enceinte en vis-à-vis du dispositif de ramassage, ainsi qu'un organe de ventilation relié fluidiquement à l'enceinte pour générer un flux d'air à travers les orifices.

Lorsque le flux d'air est un flux d'air aspiré, on comprend que la poussière est aspirée dans l'enceinte via les orifices. Le dispositif de ventilation comporte alors soit un réceptacle à poussière ou bien une sortie pour éjecter la poussière aspirée à l'extérieur du module de ramassage, par exemple sur le côté ou à l'arrière de la machine.

Lorsque le flux d'air est un flux soufflé, l'air est soufflé via les orifices de l'enceinte. Dans ce cas, ces derniers sont préférentiellement dirigés vers le sol afin d'évacuer la poussière en direction du sol.

L'organe de ventilation comprend de préférence une turbine ou un ventilateur.

Selon un mode de réalisation, le dispositif de ramassage comporte un cylindre ayant une paroi cylindrique s'étendant selon une direction parallèle au premier axe de rotation, les doigts s'étendant au-delà de la paroi cylindrique du cylindre, et dans lequel le dispositif de ventilation comporte des ouvertures ménagées dans la paroi cylindrique, ainsi qu'un élément de ventilation relié fluidiquement au cylindre pour générer un flux d'air à travers les ouvertures.

Là-encore, le flux d'air peut être un flux d'aspiration ou de soufflage. Les ouvertures présentent la forme de petits trous dont la section peut être circulaire, ovale, ou présenter une autre forme. Les orifices peuvent aussi être associés à des déflecteurs.

On comprend que les doigts font saillie radialement à l'extérieur de la paroi cylindrique.

L'élément de ventilation comprend de préférence un ventilateur ou une turbine pour générer un flux d'air aspiré ou soufflé.

De préférence, l'élément de ventilation est relié fluidiquement au cylindre via une ou plusieurs conduites, par exemple des gaines rigides ou flexibles.

De préférence, mais non exclusivement, le cylindre est constitué d'une pluralité de viroles munies d'ouvertures et fixées les unes aux autres, tout en étant juxtaposées axialement.

Selon un exemple de réalisation, le cylindre est fixe par rapport à l'élément de guidage, l'ensemble de doigts étant mobile en rotation par rapport au cylindre, et le dispositif de ventilation comporte en outre une gaine de ventilation débouchant dans le cylindre, la gaine de ventilation étant reliée fluidiquement à l'élément de ventilation.

La gaine de ventilation présente de préférence une gaine de type rectangulaire à circulaire présentant une section variable, présentant préférentiellement la forme générale d'un entonnoir.

De préférence, la gaine de ventilation est disposée à l'arrière du cylindre, et présente une première bouche d'air s'étendant selon la longueur du cylindre, et une seconde bouche d'air reliée fluidiquement à l'élément de ventilation par exemple via une conduite flexible ou rigide.

Encore de préférence, la première bouche d'air présente une section rectangulaire, tandis que la seconde bouche d'air présente une forme circulaire. La section de la première bouche d'air est supérieure à la section de la seconde bouche d'air.

De préférence, la gaine de ventilation comporte au moins un premier passage pour les doigts du premier ensemble de doigts. On comprend que les doigts sont mobiles par rapport à la gaine et se déplacent dans le premier passage lorsque l'ensemble de doigts est mis en rotation.

Selon un autre exemple de réalisation, le cylindre comporte un tube qui est rotatif par rapport à l'élément de guidage autour d'un second axe de rotation parallèle au premier axe de rotation, et un flasque latéral qui est fixe par rapport à l'élément de guidage, les ouvertures étant ménagées dans la paroi cylindrique du tube, tandis que le flasque latéral est muni d'un trou connecté à l'élément de ventilation. Le second axe de rotation peut être coaxial au premier axe de rotation. Selon un exemple de réalisation, le second axe de rotation est parallèle mais non-coaxial au premier axe de rotation. Un tel montage excentré est connu par ailleurs.

On comprend que le tube est rotatif par rapport au flasque latéral qui reste fixe.

De préférence, le dispositif de ramassage comporte en outre un deuxième ensemble de doigts de ramassage, parallèle et axialement distant du premier ensemble de doigts de ramassage, et une partie des ouvertures est située entre les premier et deuxième ensembles de doigts de ramassage.

Un intérêt est de pouvoir ventiler la partie du dispositif de ramassage située entre les deux ensembles de doigts de ramassage, ce qui améliore l'évacuation de la poussière.

Selon un premier mode de réalisation, le dispositif de ventilation est un dispositif d'aspiration pour aspirer l'air entre l'élément de guidage et le dispositif de ramassage. Il comprend de préférence une turbine pour l'aspiration. Il comporte en outre de préférence une sortie pour éjecter la poussière à l'extérieur du module de ramassage.

De préférence, l'organe de ventilation est un organe d'aspiration, tandis que l'élément de ventilation est un élément d'aspiration.

Selon un autre mode de réalisation, le dispositif de ventilation est un dispositif de soufflage pour souffler l'air entre l'élément de guidage et le dispositif de ramassage.

De préférence, l'organe de ventilation est un organe de soufflage, tandis que l'élément de ventilation est un élément de soufflage.

Sans sortir du cadre de la présente invention, l'organe de ventilation pourrait être un organe d'aspiration, tandis que l'élément de ventilation est un élément de soufflage, ou inversement.

L'invention porte en outre sur une ramasseuse d'andains de tiges végétales comportant au moins un module de ramassage selon l'invention. Le module de ramassage est situé à l'avant de la ramasseuse, et le dispositif de ramassage tourne dans le sens opposé au sens de rotation des roues de la ramasseuse.

L'invention porte enfin sur une retourneuse d'andains de tiges végétales comportant au moins un module de ramassage selon l'une quelconque des revendications précédentes. Le module de ramassage est situé à l'avant de la ramasseuse, et le dispositif de ramassage tourne dans le sens opposé au sens de rotation des roues de la retourneuse.

### Description des dessins

L'invention sera mieux comprise à la lecture de la description qui suit de modes de réalisation de l'invention donnés à titre d'exemples non limitatifs, en référence aux dessins annexés, sur lesquels :
[Fig. **1**] La figure **1** est une vue de côté d'une enrouleuse selon l'invention ;
[Fig. **2**] La figure **2** illustre un module de ramassage selon un premier exemple de réalisation de l'invention ;
[Fig. **3**] La figure **3** illustre un module de ramassage selon un deuxième exemple de réalisation de l'invention ;
[Fig. **4**] La figure **4** illustre un module de ramassage selon un troisième exemple de réalisation de l'invention ;
[Fig. **5**] La figure **5** représente un exemple de dispositif de ventilation pour les modules de ramassage des figures **2** et **4** **;**
[Fig. **6**] La figure **6** illustre un exemple de dispositif de ventilation pour les modules de ramassage des figures **3** et **4** ; et
[Fig. **7**] La figure **7** montre un autre exemple de dispositif de ventilation pour les modules de ramassage des figures **3** et **4****.**

### Description détaillée

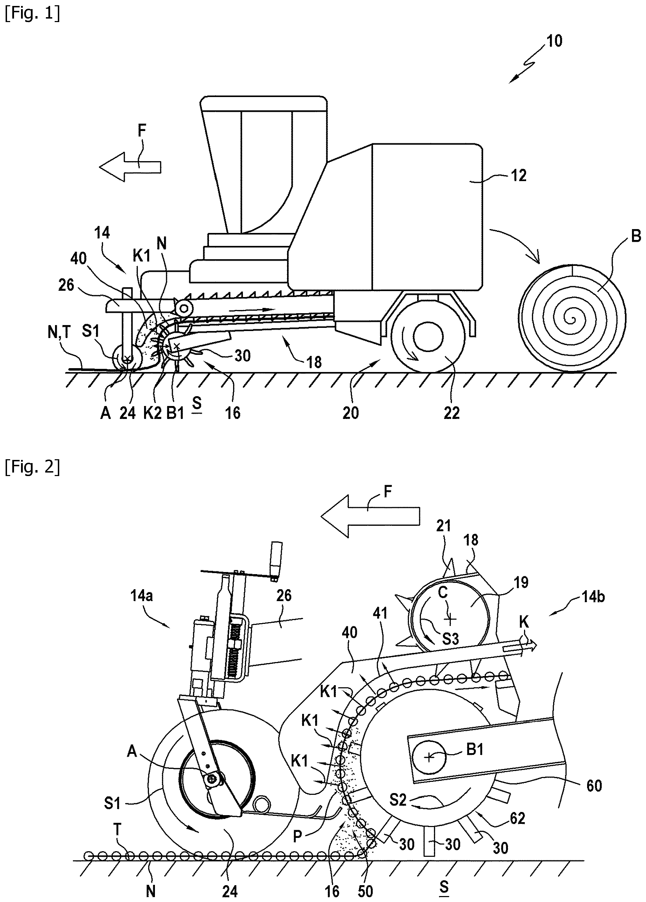

Sur la figure **1****,** on a illustré un exemple de réalisation d'une machine de ramassage **10** conforme à la présente invention. La machine de la figure **1** est une enrouleuse qui a pour fonction de ramasser les andains de tiges végétales qui reposent sur le sol **S** sous la forme d'une nappe, cette nappe est ensuite enroulée sur elle-même par la machine **10** grâce à un dispositif **12** de formation de balles **B.** Une fois les balles **B** formées, elles sont déposées sur le sol **S,** comme illustré en figure **1****.**

La machine de ramassage **10** comporte un module de ramassage **14** qui comporte un dispositif de ramassage **16** pour prélever les andains de tiges végétales déposées au sol, ainsi qu'une courroie de convoyage **18** disposée au-dessus du dispositif de ramassage et agencée pour amener les tiges végétales ramassées vers le dispositif de formation de balles **12.**

La machine de ramassage **10** d'andains de tiges végétales **T** comporte par ailleurs un dispositif de déplacement **20** pour déplacer la machine de ramassage sur le sol selon un sens d'avancement **F.** Le dispositif de déplacement **20** comporte de façon connue des roues **22** qui sont entraînées en rotation par un moteur (non illustré ici).

A l'aide des figures **2** à **4****,** on va décrire plus en détail des exemples de modules de ramassage **14** conformes à l'invention.

De façon commune, le module de ramassage **14** comporte une partie avant **14a** munie d'une roue de terrage **24** qui est agencée pour rouler sur le sol **S** selon un premier sens de rotation **S1** lorsque la machine se déplace selon le premier sens de déplacement **F.** La roue de terrage **24** est fixée à un châssis **26** du module de ramassage **14.** La roue de terrage **24** est réglable en hauteur par rapport au châssis **26,** de manière à ajuster la hauteur de la roue de ramassage du dispositif de ramassage **16** par rapport au sol **S.**

Considéré selon le sens d'avancement **F,** on constate que la roue de terrage **24** est disposée devant le dispositif de ramassage **16.** Le dispositif de ramassage **16** comporte un premier ensemble de doigts de ramassage **30** qui est rotatif autour d'un premier axe de rotation **B1** selon un second sens de rotation **S2** opposé au premier sens de rotation **S1** de la roue de terrage **24.**

La machine comporte par ailleurs un dispositif d'entraînement, non illustré ici, connu par ailleurs, pour entraîner l'ensemble de doigts en rotation.

Le module de ramassage **14** comporte aussi un élément de guidage **40** qui est disposé au-dessus de l'ensemble de doigts de ramassage **30.** Cet élément de guidage sert à guider le déplacement de l'andain qui est soulevé du sol pour le diriger vers la courroie de convoyage.

Cet élément de guidage **40** présente une paroi intérieure **41** incurvée qui couvre la partie avant de la partie supérieure du dispositif de ramassage **16,** qui, dans cet exemple, présente une forme cylindrique.

La courroie de convoyage **18** est quant à elle montée sur un rouleau **19** qui est rotatif autour d'un axe **C** selon un sens de rotation **S3** qui est opposé au deuxième sens de rotation **S2.** La courroie de convoyage **18** est munie de picots **21** qui ont pour fonction de pousser les tiges végétales ramassées vers une partie arrière **14b** du module de ramassage **14.** Comme illustré en figure **1****,** la courroie **18** se prolonge dans cet exemple jusqu'à l'entrée du dispositif de formation de balles **12.**

A l'aide des figures **2**à **4****,** on comprend que les doigts de ramassage **30** engagent la nappe **N** qui est soulevée du sol lors de la rotation selon le sens **S2 ;** les doigts **30** déplacent les tiges entre l'élément de guidage **40** et le dispositif de ramassage **16** jusqu'au moment où les tiges sont prises en charge par la courroie de convoyage **18.**

Sur la figure **2****,** on constate que les doigts **30** s'étendent sensiblement radialement par rapport au premier axe de rotation **B1.** De façon connue par ailleurs, l'extension radiale des doigts **30** est maximale lorsque les doigts sont dirigés vers le sol **S,** et l'extension est minimale voire nulle lorsque les doigts s'étendent vers la courroie de convoyage **18.**

Dans la mesure où la surface du sol n'est ni régulière ni plane, il arrive que les doigts **30** viennent au contact du sol **S,** ce qui a pour effet de générer de la poussière. La poussière générée s'introduit alors dans la nappe lorsqu'elle se soulève du sol. La poussière est illustrée par les petits points sur les figures **1** à **4****.**

Conformément à l'invention, le module de ramassage **14** comporte en outre un dispositif de ventilation **50** pour générer un ou plusieurs flux d'air - référencés **K1**, **K2** - entre l'élément de guidage **40** et le dispositif de ramassage **16** afin d'évacuer la poussière **P** soulevée lors du prélèvement des andains par l'ensemble des doigts de ramassage.

Sur les figures **2** à **4**, les flux d'air **K1**, **K2** sont représentés par des flèches.

Dans les exemples illustrés, les flèches montrent des flux d'air aspirés. Toutefois, sans sortir de l'invention, les flux d'air pourraient aussi être des flux d'air soufflés. Dans ce cas, les orientations des flèches seraient inversées.

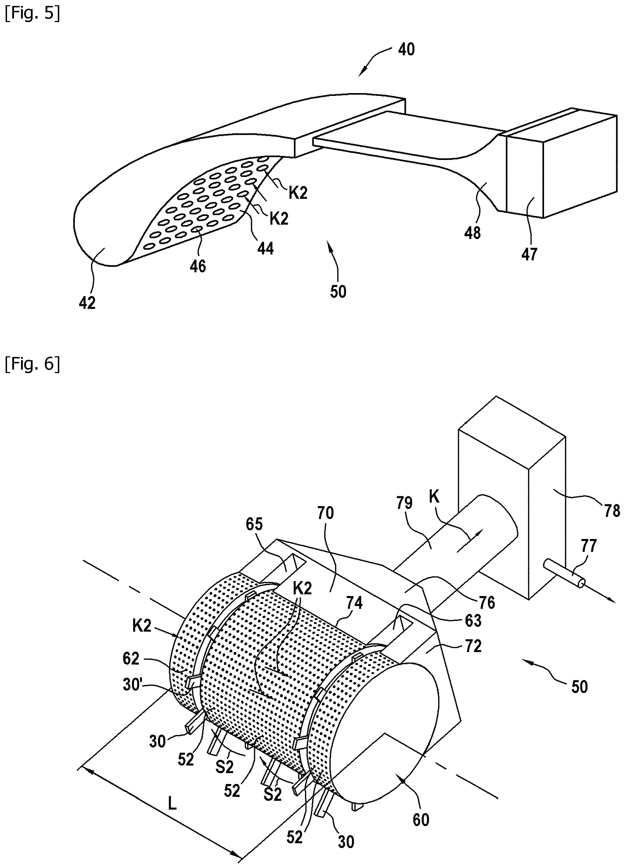

Dans l'exemple de la figure **2****,** le dispositif de ventilation **50** génère un flux d'air **K1** entre l'élément de guidage **40** et le dispositif de ramassage **16.** Pour ce faire, l'élément de guidage **40** comporte dans cet exemple une enceinte **42,** qui est illustrée en figure **5****,** cette enceinte **42** ayant une paroi d'enceinte **44** qui comporte des orifices **46** ménagés dans la paroi d'enceinte **44.** On comprend que ces orifices **46** sont ménagés en vis-à-vis du dispositif de ramassage **16.**

Le dispositif de ventilation **50** comporte en outre un organe de ventilation **47** relié fluidiquement à l'enceinte **42** via une gaine **48.** Dans cet exemple, l'organe de ventilation **47** est un organe d'aspiration comprenant par exemple une turbine configurée pour générer un flux d'air **K2** à travers les orifices **46.** On comprend que l'organe d'aspiration a pour fonction d'aspirer l'air, et les poussières, contenues dans l'enceinte **42.**

Sans sortir du cadre de la présente invention, le flux d'air généré par le dispositif de ventilation **50** pourrait être un flux d'air soufflé de manière à souffler de l'air au travers des orifices **46.** Dans ce cas, l'organe de ventilation **47** serait un organe de soufflage configuré pour souffler de l'air dans l'organe de ventilation **47,** et par suite, au travers des orifices **46** afin d'évacuer la poussière vers le sol.

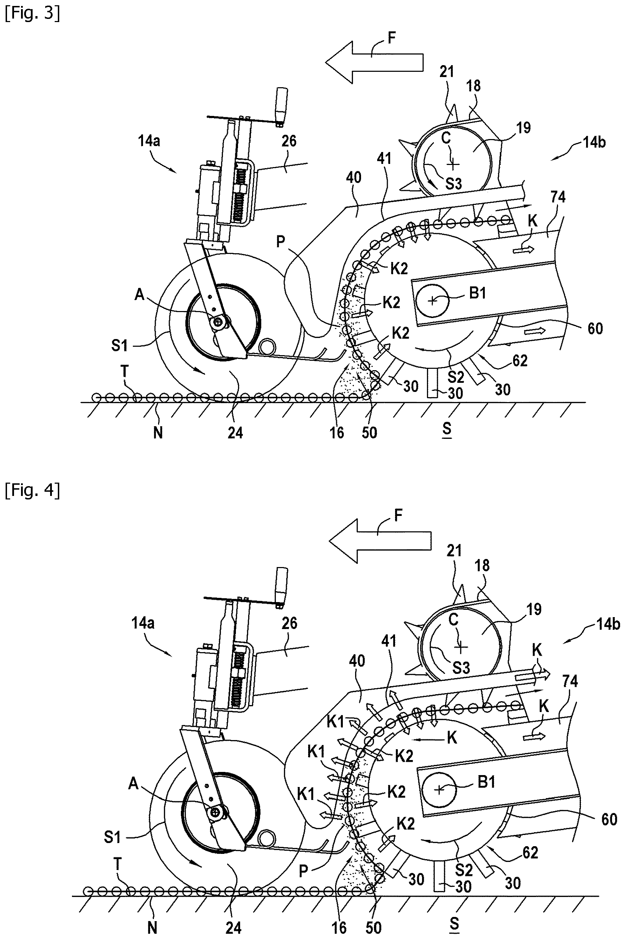

Sur la figure **3****,** on a illustré un autre mode de réalisation du dispositif de ventilation **50** selon l'invention. Dans cet exemple, le dispositif de ramassage **16** comporte un cylindre **60** ayant une paroi cylindrique **62** qui s'étend selon une direction parallèle au premier axe de rotation **B1** des doigts **30.** Les doigts **30** font saillie sensiblement radialement au-delà de la paroi cylindrique du cylindre **60.**

Le dispositif de ventilation **50** a pour fonction de générer un flux d'air aspiré **K2** de façon à entrainer la poussière à l'intérieur du cylindre **60** en traversant la paroi cylindrique **62.**

Dans l'exemple de la figure **6****,** le dispositif de ventilation **50** comporte des ouvertures **52** qui sont ménagées dans la paroi cylindrique **62,** ainsi qu'un élément de ventilation **70** qui est relié fluidiquement au cylindre **60** pour générer un flux d'air à travers les ouvertures **52.**

Dans cet exemple non limitatif, les ouvertures présentent une section circulaire et sont réparties sur la surface de la paroi cylindrique. Le dispositif de ventilation comporte un élément de ventilation **78,** dans cet exemple un élément d'aspiration, qui comporte de préférence une turbine.

Dans cet exemple, le cylindre **60** est fixe par rapport à l'élément de guidage **40.** L'ensemble de doigts **30** est mobile en rotation par rapport au cylindre **60.** Par ailleurs, le dispositif de ventilation comporte une gaine de ventilation **72** qui débouche dans le cylindre **60.** Cette gaine de ventilation **72** - de type rectangulaire-circulaire - est disposée à l'arrière du cylindre **60,** considérée selon le sens d'avancement **F,** et présente une première bouche d'air **74** s'étendant selon la longueur **L** du cylindre et une seconde bouche d'air **76** qui est reliée à l'élément de ventilation **78** par l'intermédiaire d'une conduite **79.**

On comprend que la section de la seconde bouche d'air **76** est inférieure à la section de la première bouche d'air **74.**

L'élément de ventilation **78** génère un flux d'air **K2** d'aspiration à travers les ouvertures **52,** de sorte que la poussière qui se trouve entre l'élément de guidage et le dispositif de ramassage est aspirée au travers de la paroi cylindrique **62** du cylindre **60.** La poussière est préférentiellement éjectée hors de l'élément de ventilation via une sortie **77** appropriée.

Comme on le constate sur la figure **6****,** la gaine de ventilation **72** comporte par ailleurs un premier passage **63** pour les doigts **30** du premier ensemble de doigts, et un second passage **65** pour les doigts **30** d'un deuxième ensemble de doigts **30'** qui est parallèle au premier ensemble de doigts **30.**

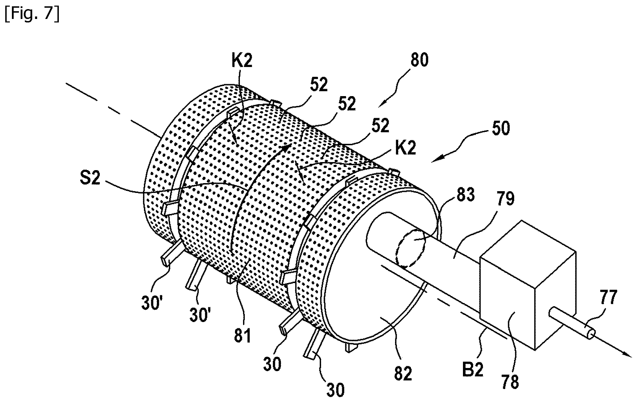

Sur la figure **7****,** on a illustré une variante de réalisation du dispositif de ramassage de la figure **6****.** Dans cette variante, le cylindre **60** comporte un tube **80** qui est rotatif par rapport à l'élément de guidage autour d'un second axe de rotation **B2** qui est parallèle au premier axe de rotation **B1.** L'ensemble de doigts est préférentiellement excentré par rapport à l'axe de rotation du cylindre par rapport au second axe de rotation du cylindre. De façon connue par ailleurs, cet excentrement permet de modifier la longueur de la partie des doigts qui fait saillie au-delà de la paroi du tube.

Le cylindre **60** comprend par ailleurs un flasque latéral **82** qui est fixe par rapport à l'élément de guidage **40.** On comprend donc que le tube **80** est monté rotatif par rapport au flasque latéral **82.** A l'instar de l'exemple de la figure **6****,** le tube comporte également une paroi cylindrique **81** dans laquelle sont ménagées des ouvertures **52.** Le flasque latéral **82** est quant à lui muni d'un trou **83** connecté à l'élément de ventilation **78** via une conduite **79.** Cela permet d'aspirer l'air et les poussières contenus dans le tube **80** grâce au flux d'air **K2** généré par l'élément de ventilation **78.**

Sur la figure **4****,** on a illustré un autre exemple de réalisation du module de ramassage selon l'invention dont le dispositif de ventilation **50** combine les dispositifs de ventilation des figures **2** et **3** décrits ci-dessus.

On comprend que le mode de réalisation de la figure **4** permet d'aspirer une plus grande quantité de poussières que les modes de réalisation des figures **2** et **3****.**

## Revendications

1. Module de ramassage (14) d'andains de tiges végétales (T) comprenant :
• une partie avant (14a) munie d'une roue de terrage (24) qui est agencée pour rouler sur un sol (S) selon un premier sens de rotation (S1) lorsque le module de ramassage se déplace selon un premier sens de déplacement (F) ;
• un dispositif de ramassage (16) pour prélever les andains de tiges végétales déposées au sol, comprenant au moins un premier ensemble de doigts de ramassage qui est rotatif autour d'un premier axe de rotation (B1) selon un second sens de rotation (S2) opposé au premier sens de rotation (S1) de la roue de terrage ;
• un élément de guidage (40) disposé au-dessus de l'ensemble de doigts de ramassage (30) ;
• une courroie de convoyage (18) agencée pour amener les tiges végétales ramassées vers une partie arrière (14b) du module de ramassage ;
le module de ramassage (14) étant **caractérisé en ce qu'**il comporte en outre un dispositif de ventilation (50) pour générer au moins un flux d'air (K) entre l'élément de guidage (40) et le dispositif de ramassage (16) afin d'évacuer la poussière (P) de sol générée lors du prélèvement des andains par l'ensemble des doigts de ramassage.

2. Module de ramassage selon la revendication 1, dans lequel l'élément de guidage (40) comporte une enceinte (42) ayant une paroi d'enceinte (44), et le dispositif de ventilation (50) comporte des orifices (46) ménagés dans la paroi d'enceinte en vis-à-vis du dispositif de ramassage, ainsi qu'un organe de ventilation (47) relié fluidiquement à l'enceinte pour générer un flux d'air à travers les orifices.

3. Module de ramassage selon la revendication 1 ou 2, dans lequel le dispositif de ramassage (16) comporte un cylindre (60) ayant une paroi cylindrique s'étendant selon une direction parallèle au premier axe de rotation (B1), les doigts (30) s'étendant au-delà de la paroi cylindrique (62) du cylindre (60), et dans lequel le dispositif de ventilation (50) comporte des ouvertures (52) ménagées dans la paroi cylindrique, ainsi qu'un élément de ventilation (70) relié fluidiquement au cylindre pour générer un flux d'air à travers les ouvertures.

4. Module de ramassage selon la revendication 3, dans lequel le cylindre est constitué d'une pluralité de viroles munies d'ouvertures et fixées les unes aux autres.

5. Module de ramassage selon la revendication 3 ou 4, dans lequel le cylindre (60) est fixe par rapport à l'élément de guidage (40), l'ensemble de doigts (30) étant mobile en rotation par rapport au cylindre, et dans lequel le dispositif de ventilation comporte en outre une gaine de ventilation (72) débouchant dans le cylindre, la gaine de ventilation étant reliée fluidiquement à l'élément de ventilation.

6. Module de ramassage selon la revendication 5, dans lequel la gaine de ventilation (72) est disposée à l'arrière du cylindre (60), et présente une première bouche d'air (74) s'étendant selon la longueur (L) du cylindre, et seconde bouche d'air (76) reliée à l'élément de ventilation.

7. Module de ramassage selon la revendication 5 ou 6, dans lequel, la gaine de ventilation (76) comporte au moins un premier passage (63) pour les doigts (30) du premier ensemble de doigts.

8. Module de ramassage selon la revendication 3 ou 4, dans lequel le cylindre (60) comporte un tube (80) qui est rotatif par rapport à l'élément de guidage autour d'un second axe de rotation (B2) parallèle au premier axe de rotation (B1), et un flasque latéral (88) qui est fixe par rapport à l'élément de guidage (40), dans lequel les ouvertures sont ménagées dans la paroi cylindrique du tube, tandis que le flasque latéral (82) est muni d'un trou (83) connecté à l'élément de ventilation.

9. Module de ramassage selon l'une quelconque des revendications 3 à 8, dans lequel le dispositif de ramassage comporte en outre un deuxième ensemble de doigts de ramassage (30'), parallèle et distant au premier ensemble de doigts de ramassage, et dans lequel une partie des ouvertures (52) est située entre les deux ensembles de doigts de ramassage.

10. Module de ramassage selon l'une quelconque des revendications précédentes, dans lequel le dispositif de ventilation (50) est un dispositif d'aspiration pour aspirer l'air entre l'élément de guidage (40) et le dispositif de ramassage (16).

11. Module de ramassage selon les revendications 2, 3 et 10, dans lequel l'organe de ventilation est un organe d'aspiration, tandis que l'élément de ventilation est un élément d'aspiration.

12. Module de ramassage selon l'une quelconque des revendications 1 à 10, dans lequel le dispositif de ventilation est un dispositif de soufflage pour souffler l'air entre l'élément de guidage (40) et le dispositif de ramassage (16).

13. Module de ramassage selon les revendications 2, 3 et 12, dans lequel l'organe de ventilation est un organe de soufflage, tandis que l'élément de ventilation est un élément de soufflage.

14. Ramasseuse d'andains de tiges végétales comportant au moins un module de ramassage selon l'une quelconque des revendications précédentes.

15. Retourneuse d'andains de tiges végétales comportant au moins un module de ramassage selon l'une quelconque des revendications précédentes.

## Patentansprüche

1. Sammelmodul (14) von Schwaden von Pflanzenstängeln (T), umfassend:
• einen vorderen Teil (14a), der mit einem Bodenstützrad (24) versehen ist, das angeordnet ist, um auf einem Boden (S) in einer ersten Drehrichtung (S1) zu rollen, wenn sich das Sammelmodul in einer ersten Fahrtrichtung (F) bewegt;
• eine Sammelvorrichtung (16) zum Aufnehmen der Schwaden von auf dem Boden abgelegten Pflanzenstängeln, umfassend mindestens eine erste Anordnung von Sammelfingern, die um eine erste Drehachse (B1) in einer zweiten Drehrichtung (S2) entgegengesetzt zu der ersten Drehrichtung (S1) des Bodenstützrads drehbar ist;
• ein Führungselement (40), das über der Anordnung von Sammelfingern (30) angeordnet ist;
• ein Förderband (18), das angeordnet ist, um die gesammelten Pflanzenstängel zu einem hinteren Teil (14b) des Sammelmoduls zu bringen; wobei das Sammelmodul (14) **dadurch gekennzeichnet ist, dass** es ferner eine Belüftungsvorrichtung (50) umfasst, um mindestens einen Luftstrom (K) zwischen dem Führungselement (40) und der Sammelvorrichtung (16) zu erzeugen, um den Staub (P) von dem Boden abzuführen, der beim Aufnehmen der Schwaden durch die Anordnung von Sammelfingern erzeugt wird.

2. Sammelmodul nach Anspruch 1, wobei das Führungselement (40) eine Einfassung (42) umfasst, die eine Einfassungswand (44) aufweist, und die Belüftungsvorrichtung (50) Aperturen (46), die in der Einfassungswand gegenüber der Sammelvorrichtung ausgebildet sind, sowie ein Belüftungsorgan (47), das fluidisch mit der Einfassung verbunden ist, um einen Luftstrom durch die Aperturen zu erzeugen, umfasst.

3. Sammelmodul nach Anspruch 1 oder 2, wobei die Sammelvorrichtung (16) einen Zylinder (60) umfasst, der eine zylindrische Wand aufweist, die sich in einer Richtung parallel zu der ersten Drehachse (B1) erstreckt, wobei sich die Finger (30) über die zylindrische Wand (62) des Zylinders (60) hinaus erstrecken, und wobei die Belüftungsvorrichtung (50) Öffnungen (52), die in der zylindrischen Wand ausgebildet sind, sowie ein Belüftungselement (70), das fluidisch mit dem Zylinder verbunden ist, um einen Luftstrom durch die Öffnungen zu erzeugen, umfasst.

4. Sammelmodul nach Anspruch 3, wobei der Zylinder aus einer Vielzahl von Ringen besteht, die mit Öffnungen versehen und aneinander befestigt sind.

5. Sammelmodul nach Anspruch 3 oder 4, wobei der Zylinder (60) in Bezug auf das Führungselement (40) feststehend ist, wobei die Anordnung von Fingern (30) in Bezug auf den Zylinder drehbar ist, und wobei die Belüftungsvorrichtung ferner einen Belüftungskanal (72) umfasst, der in den Zylinder mündet, wobei der Belüftungskanal fluidisch mit dem Belüftungselement verbunden ist.

6. Sammelmodul nach Anspruch 5, wobei der Belüftungskanal (72) an der Rückseite des Zylinders (60) angeordnet ist und einen ersten Luftauslass (74), der sich entlang der Länge (L) des Zylinders erstreckt, und einen zweiten Luftauslass (76), der mit dem Lüftungselement verbunden ist, aufweist.

7. Sammelmodul nach Anspruch 5 oder 6, wobei der Lüftungskanal (76) mindestens einen ersten Durchgang (63) für die Finger (30) der ersten Anordnung von Fingern umfasst.

8. Sammelmodul nach Anspruch 3 oder 4, wobei der Zylinder (60) ein Rohr (80), das in Bezug auf das Führungselement um eine zweite Drehachse (B2) parallel zu der ersten Drehachse (B1) drehbar ist, und einen Seitenflansch (88), der in Bezug auf das Führungselement (40) feststehend ist, umfasst, wobei die Öffnungen in der zylindrischen Wand des Rohrs ausgebildet sind, während der Seitenflansch (82) mit einem Loch (83) versehen ist, das mit dem Belüftungselement verbunden ist.

9. Sammelmodul nach einem der Ansprüche 3 bis 8, wobei die Sammelvorrichtung ferner eine zweite Anordnung von Sammelfingern (30') umfasst, die parallel zu und beabstandet von der ersten Anordnung von Sammelfingern ist, und wobei sich ein Teil der Öffnungen (52) zwischen den zwei Anordnungen von Sammelfingern befindet.

10. Sammelmodul nach einem der vorherigen Ansprüche, wobei die Belüftungsvorrichtung (50) eine Saugvorrichtung zum Ansaugen von Luft zwischen dem Führungselement (40) und der Sammelvorrichtung (16) ist.

11. Sammelmodul nach den Ansprüchen 2, 3 und 10, wobei das Belüftungsorgan ein Saugorgan ist, während das Belüftungselement ein Saugelement ist.

12. Sammelmodul nach einem der Ansprüche 1 bis 10, wobei die Belüftungsvorrichtung eine Blasvorrichtung zum Blasen von Luft zwischen dem Führungselement (40) und der Sammelvorrichtung (16) ist.

13. Sammelmodul nach den Ansprüchen 2, 3 und 12, wobei das Belüftungsorgan ein Blasorgan ist, während das Belüftungselement ein Blaselement ist.

14. Sammler für Schwaden von Pflanzenstängeln, umfassend mindestens ein Sammelmodul nach einem der vorherigen Ansprüche.

15. Wender für Schwaden von Pflanzenstängeln, umfassend mindestens ein Sammelmodul nach einem der vorherigen Ansprüche.

## Claims

1. A collection module (14) for collecting windrows of plant stems (T), comprising:
• a front part (14a) provided with a ground wheel (24) which is arranged to roll on a ground (S) in a first direction of rotation (S1) when the collection module moves in a first direction of movement (F);
• a collection device (16) for picking up windrows of plant stems deposited on the ground, comprising at least a first set of collection fingers which is rotatable about a first axis of rotation (B1) in a second direction of rotation (S2) opposite the first direction of rotation (S1) of the ground wheel;
• a guide element (40) disposed above the set of collection fingers (30);
• a conveyor belt (18) arranged to bring the collected plant stems toward a rear part (14b) of the collection module;
the collection module (14) being **characterized in that** it further comprises a ventilation device (50) for generating at least one air flow (K) between the guide element (40) and the collection device (16) in order to evacuate the ground dust (P) generated during the collection of the windrows by the set of collection fingers.

2. The collection module according to claim 1, wherein the guide element (40) comprises an enclosure (42) having an enclosure wall (44), and the ventilation device (50) comprises orifices (46) formed in the enclosure wall facing the collection device, as well as a ventilation member (47) fluidly connected to the enclosure to generate an air flow through the orifices.

3. The collection module according to claim 1 or 2, wherein the collection device (16) comprises a cylinder (60) having a cylindrical wall extending in a direction parallel to the first axis of rotation (B1), the fingers (30) extending beyond the cylindrical wall (62) of the cylinder (60), and wherein the ventilation device (50) comprises openings (52) formed in the cylindrical wall, as well as a ventilation element (70) fluidly connected to the cylinder to generate an air flow through the openings.

4. The collection module according to claim 3, wherein the cylinder consists of a plurality of ferrules provided with openings and attached to one another.

5. The collection module according to claim 3 or 4, wherein the cylinder (60) is fixed relative to the guide element (40), the set of fingers (30) being movable in rotation relative to the cylinder, and wherein the ventilation device further comprises a ventilation duct (72) opening into the cylinder, the ventilation duct being fluidly connected to the ventilation element.

6. The collection module according to claim 5, wherein the ventilation duct (72) is arranged at the rear of the cylinder (60), and has a first air vent (74) extending along the length (L) of the cylinder, and second air vent (76) connected to the ventilation element.

7. The collection module according to claim 5 or 6, wherein the ventilation duct (76) comprises at least one first passage (63) for the fingers (30) of the first set of fingers.

8. The collection module according to claim 3 or 4, wherein the cylinder (60) comprises a tube (80) which is rotatable relative to the guide element about a second axis of rotation (B2) parallel to the first axis of rotation (B1), and a side flange (88) which is fixed relative to the guide element (40), in which the openings are provided in the cylindrical wall of the tube, while the side flange (82) is provided with a hole (83) connected to the ventilation element.

9. The collection module according to any one of claims 3 to 8, wherein the collection device further comprises a second set of collection fingers (30'), parallel and distant from the first set of collection fingers, and wherein a part of the openings (52) is located between the two sets of collection fingers.

10. The collection module according to any one of the preceding claims, wherein the ventilation device (50) is a suction device for sucking air between the guide element (40) and the collection device (16).

11. The collection module according to claims 2, 3 and 10, wherein the ventilation member is a suction member, while the ventilation element is a suction element.

12. The collection module according to any one of claims 1 to 10, wherein the ventilation device is a blowing device for blowing air between the guide element (40) and the collection device (16).

13. The collection module according to claims 2, 3 and 12, wherein the ventilation member is a blowing member, while the ventilation element is a blowing element.

14. A windrow collector for plant stems comprising at least one collection module according to any one of the preceding claims.

15. A windrow turner for plant stems comprising at least one collection module according to any one of the preceding claims.
